# EUROPÄISCHE PATENTSCHRIFT

(11) **EP 2 153 970 B1**
(45) Veröffentlichungstag und Bekanntmachung des Hinweises auf die Patenterteilung: **24.12.2014**
(21) Anmeldenummer: 09010565.1
(22) Anmeldetag: 17.08.2009
(51) Int. Cl.: B29C 47/88, B29C 47/90, B29C 47/92

(54) **Verfahren zum Betreiben einer Extrusionslinie für Hohlprofile aus Kunststoff**
Method for operating an extrusion line for plastic hollow profiles
Procédé de fonctionnement d'une ligne d'extrusion pour profils creux en matière synthétique

(30) Priorität: 15.08.2008 DE 102008037875
(43) Veröffentlichungstag der Anmeldung: 17.02.2010
(73) Patentinhaber: IBA GmbH, 32547 Bad Oeynhausen (DE)
(72) Erfinder: Schmuhl, Jörg, Dr., 15711 Königs Wusterhausen (DE); Klose, Reinhard, 31737 Rinteln (DE)
(74) Vertreter: Seewald, Jürgen

(56) Entgegenhaltungen:
- EP-A1- 0 209 933
- EP-A2- 1 568 465
- EP-A2- 1 683 624
- WO-A1-97/10941
- DD-A1- 211 314
- DE-A1- 4 033 441
- DE-A1- 4 200 273
- DE-A1- 19 709 895
- DE-B1- 1 920 837
- US-A1- 2006 099 291

## Beschreibung

Die vorliegende betrifft ein Verfahren zum Betreiben einer Extrusionslinie für Hohlprofile aus Kunststoff gemäß dem Oberbegriff des Anspruchs 1.

Bei aus dem Stand der Technik bekannten Extrusionslinien bestehen die Kühlstrecken in den Kalibrier- und Kühleinheiten und den Kühltanks aus mehreren auf den Umfang des Hohlprofils verteilten, stationär angeordneten und sich im wesentlichen über die gesamte Länge der Kalibrier- und Kühleinheiten bzw. Kühltanks erstreckenden Versorgungsleitungen, an denen Düsen für die Abgabe eines Kühlmediums angeordnet sind. Eine derartig ausgeführte Kalibrier- und Kühleinheit ist z. B. in der DE 1 920 837 beschrieben. Eine Änderung der Kühlleistung erfolgt, indem die Menge des Kühlmediums und/oder die Temperatur des Kühlmediums variiert werden. Das geschieht einheitlich über die gesamte Kühlstrecke der Kalibrier- und Kühleinheit bzw. den Kühltanks.

Aufgrund der Kühlung der Hohlprofils entsteht in dessen Wandung, hervorgerufen durch die schlechte Wärmeleitfähigkeit des Materials, ein starkes Temperaturgefälle derart, dass die Außenseite des Profils kühler als die Innenseite ist. Die relativ niedrige Oberflächentemperatur des Hohlprofils führt zu einer Reduzierung des Abkühlprozesses. Zudem werden durch die Au-ßenkühlung in der Wand des Hohlprofils unerwünschte Spannungen im Material eingefroren.

Da das Kunststoffprofil für die weitere Verarbeitung am Ende der Kühlstrecke eine bestimmte Temperatur unterschreiten soll, muss zur Erfüllung dieser Forderung in den meisten Fällen die Liniengeschwindigkeit abgesenkt werden. Zusätzlich muss zwischen der Kalibrier- und Kühleinheit und dem Kühltank bzw. zwischen den Kühltanks, wenn mehrere vorhanden sind, eine Temperstrecke vorgesehen werden. In diesen Temperstrecken kann sich die Profilwand durch einen inneren Temperaturausgleich an der äußeren Oberfläche erwärmen. Dies hat zum einen den positiven Effekt, dass sich in der Profilwand eingefrorene Spannungen im Material wieder abbauen können. Zum anderen wird durch die Erwärmung der äußeren Oberfläche die Triebkraft zwischen Material und Kühlmedium wieder größer, so dass höhere Wärmemengen übertragen werden können und sich so der Abkühlvorgang beschleunigt.

In der EP 209 933 A1 ist eine Extrusionslinie für Hohlprofile aus Kunststoff, insbesondere zylinderförmige Rohre, offenbart, die eine Kalibrier- und Kühleinheit und mindestens einen sich in Extrusionsrichtung anschließenden Kühltank mit Kühlstrecken aufweist, die aus einer Vielzahl von Düsen zur Abgabe eines Kühlmediums bestehen, wobei die Kühlstrecken der Kalibrier-Kühleinheit und/oder des Kühltanks aus in Extrusionsrichtung hintereinander gereihten, kühlmedienseitig getrennten, separat ansteuerbaren Segmenten zusammengesetzt sind. Neben dieser Außenkühlung ist in der EP 209 933 A1 auch eine Innenkühlung des extrudierten Rohres offenbart.

In der WO 97/10941, die den Oberbegriff des Anspruchs 1 offenbart, wird die Herstellung eines ausgerichteten Polymerprodukts beschrieben. Dabei wird der Betrag der Ausrichtung mittels eines geeigneten Messverfahrens ermittelt. Die Ergebnisse der Messung von Absorptionsspitzen können dann mathematisch analysiert werden und über einen Regelkreis in ein Prozesssteuerungssystem einer Extrusionsvorrichtung eingebunden werden, z.B. in das Steuerungssystem eines Extruders oder von Erhitzungseinheiten. Auf diese Weise ist es möglich, die Ausrichtung des Polymermaterials durch ein automatisches Prozesssteuerungssystem zu regeln.

In der Vergangenheit wurden die Kühl- und Temperabschnitte einer Kühlstrecke empirisch ermittelt, grob berechnet oder nur für eine Profildimension mit einem bestimmten Arbeitspunkten ausgelegt. In der Praxis werden jedoch auf den meisten Extrusionslinien unterschiedliche Profildimensionen (Durchmesser, Wanddicken), dazu aus verschiedenen Materialien, in verschiedenen Arbeitspunkten und somit völlig unterschiedlichen thermischen Anforderungen produziert. Bei diesen Anforderungen lässt sich bei der bisherigen Herangehensweise in den meisten Fällen kein optimaler Arbeitspunkt der gesamten Extrusionslinie einstellen.

Aufgabe der vorliegenden Erfindung ist es, ein Verfahren zum Betreiben einer Extrusionslinie zur Verfügung zu stellen, das es ermöglicht, eine Extrusionslinie mit optimaler Kühlung zu betreiben und dabei entsprechend den Qualitätsanforderungen möglichst geringe Spannungen im Material des extrudierten Profils einzufrieren.

Diese Aufgabe wird mittels eines Verfahrens gelöst, welches die Merkmale des Anspruchs 1 aufweist.

Die Ansteuerung der Segmente der Kühlstrecke erfolgt auf der Grundlage eines mathematischen Modells. Dazu ist die Kühlstrecke in mehrere Abschnitte unterteilt, die jeweils als ein mathematisches Modell abgebildet werden. Durch eine sequenzielle Reihenfolge der einzelnen Abschnitte wird die gesamte Kühlstrecke beschrieben. Besondere Berücksichtigung finden dabei temperaturabhängige Stoffwerte, geometrische Daten sowie die Wärmeübergangsprozesse innerhalb der Profilwand und an die Umgebung. Zudem benötigt das Modell Daten, die direkt aus dem Extrusionsprozess gewonnen werden, wie Materialtemperatur am Werkzeug, Massendurchsatz, Abzugsgeschwindigkeit, Kühlwassertemperatur, Kühlwassermenge, Druck im Vakuumtank usw. Um die Extrusionslinie exakt regeln zu können, Abweichungen zu erkennen oder zusätzliche Parameter zu erhalten, wird an einzelnen Stellen der Kühlstrecke die Materialtemperatur ermittelt. Dies ist kontakt- und zerstörungsfrei durch eine Messung Schallgeschwindigkeit in der Profilwand möglich. Aus der Wanddicke und der gemessenen Laufzeit des Ultraschalls ergibt sich die Schallgeschwindigkeit. Diese Schallgeschwindigkeit steht neben Materialparametern in direkter Korrelation mit der Materialtemperatur. Durch dieses Verfahren kann die mittlere Materialtemperatur exakt ermittelt werden. Mit Hilfe des mathematischen Modells kann dann auf den exakten Temperaturverlauf innerhalb der Profilwand geschlossen werden.

Weitere Vorteilhafte Ausgestaltungen der Erfindung ergeben sich aus den Unteransprüchen.

Die Erfindung wird nachstehend anhand von Ausführungsbeispielen näher erläutert. In der dazugehörigen Zeichnung zeigt in schematischer Weise:
- Fig. 1: eine Seitenansicht einer Rohrextrusionslinie,
- Fig. 2: einen Längsschnitt durch den Vakuumtank der Rohrextrusionslinie nach einer ersten Ausführungsform der vorliegenden Erfindung,
- Fig. 3: einen vergrößerten Querschnitt A-A gemäß Fig. 2,
- Fig. 4: einen vergrößerten Querschnitt A-A gemäß Fig. 2 nach einer zweiten Ausführungsform der vorliegenden Erfindung, und
- Fig, 5: einen Längsschnitt durch den Vakuumtank der Rohrextrusionslinie in einer weiteren Ausführungsform der vorliegenden Erfindung.

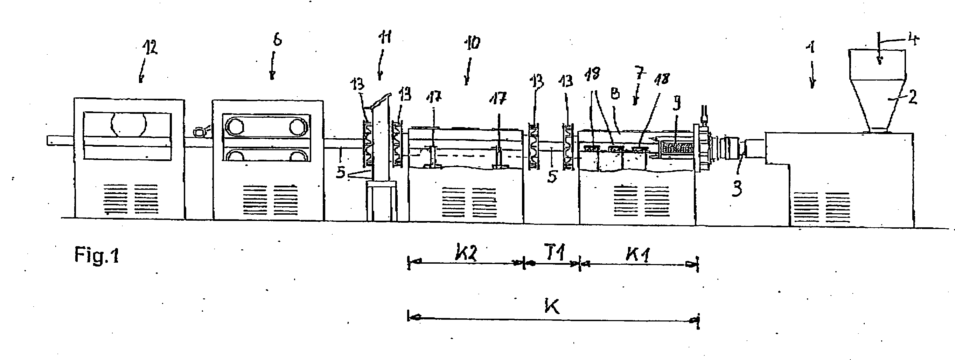

Die in Fig. 1 dargestellte Extrusionslinie dient der Herstellung von Kunststoffrohren 5. Sie umfasst eine Extrudereinheit 1 mit einem Aufgabetrichter 2, einer aus der Zeichnung nicht ersichtlichen Extruderschnecke und einem Rohrkopf 3. Über den Aufgabetrichter 2 wird ein thermoplastischer Kunststoff 4 in Granulat- oder Pulverform der Extrudereinheit 1 zugeführt. In dieser wird das Granulat bzw. Pulver erwärmt, geknetet und plastifiziert. Anschließend wird der Kunststoff 4 als formbare Masse durch die Extruderschnecke in den Rohrkopf 3 gefördert und dort durch einen ringförmigen Austrittsspalt gedrückt.

Nach dem Austritt aus dem Rohrkopf 3 wird das heiße, noch verformbar re Rohr 5 mittels eines am Ende der Extrusionslinie angeordneten Raupenabzugs 6 durch eine Kalibrier- und Kühleinheit 7 gezogen, die einen Vakuumtank 8 mit einer an dessen Eingang angeordneten Kalibrierhülse 9 aufweist. Die Kalibrierhülse 9 ist stufenlos im Durchmesser einstellbar, so dass das extrudierte, noch formbare Rohr 5 auf den gewünschten Durchmesser fixiert werden kann. In diesem Ausführungsbeispiel kommt beispielsweise eine Kalibrierhülse 9 zum Einsatz, wie sie in der DE 10 2005 002 820 B1 beschrieben ist. Es ist aber auch jede andere, für einen Dimensionswechsel bei laufendem Betrieb geeignete Kalibrierhülse einsetzbar. Neben der Kalibrierung des extrudierten Rohres 5 wird dieses im Vakuumtank 6 gekühlt, wozu dort eine Kühleinrichtung 14 vorgesehen ist, deren Aufbau und Funktion weiter unten noch näher erläutert wird.

Nach dem Verlassen der Kalibrier- und Kühleinheit 7 tritt das Rohr 5 in eine in einem Kühltank 10 gebildete Kühlstrecke K2 ein, in der es auf etwa Raumtemperatur abgekühlt wird. Zwischen dem Kühltank 10 und dem Raupenabzug 6 ist ein Ultraschallscanner 11 angeordnet, durch den der Durchmesser und die Wanddicke des extrudierten Rohres 5 erfasst werden. Dem Raupenabzug 6 schließt sich eine Trennsäge 12 an, in der das Rohr 5 abgelängt wird. Zur Abdichtung der Kalibrier- und Kühleinheit 7, des Kühltanks 10 und des Ultraschallscanners 11 sind Dichtungen 13 vorgesehen, die das durchlaufende Rohr 5 abdichtend umschließen.

Da das extrudierte Rohr 5 erst nach Verlassen des Kühltank 10 ausgehärtet, d.h., formstabil ist, muss es zuvor abgestützt werden, um ein Durchhängen und damit Deformieren zu vermeiden. Dazu sind in dem Kühltank 10 zwei Stützvorrichtungen 17 und im Vakuumtank 8 drei Stützvorrichtungen 18 vorgesehen. Die Ausführung der Stützvorrichtungen 17 im Kühltank 10 entspricht dem Stand der Technik, wie er beispielsweise aus der WO 20041106034 A1 hervorgeht.

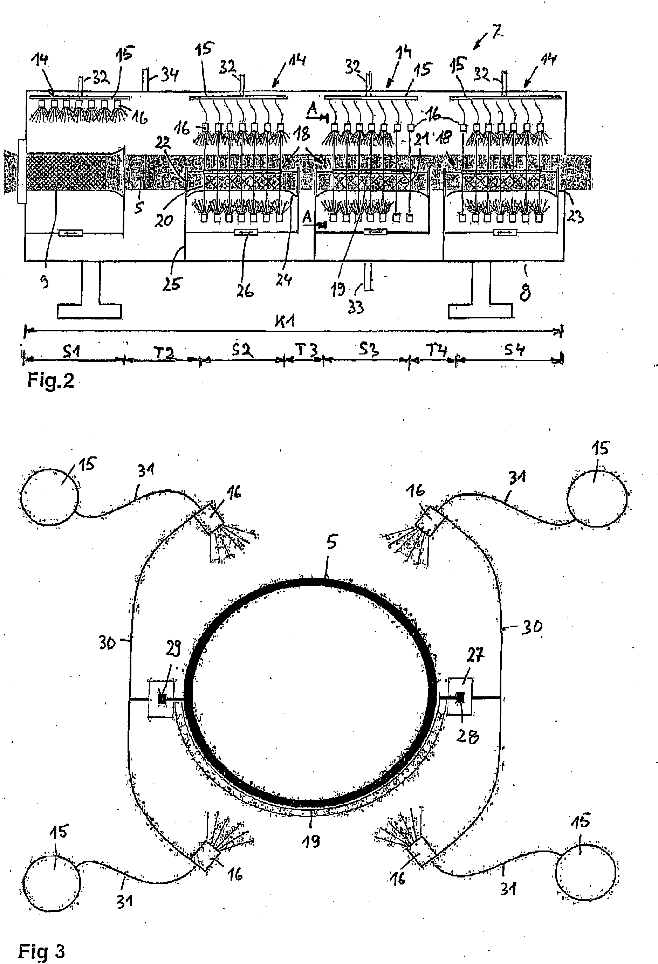

Der Aufbau und die Wirkungsweise der Stützvorrichtungen 18 im Vakuumtank 8 wird nachstehend anhand der Fig. 2 bis 4, die zwei verschiedene Ausführungsformen zeigen, näher erläutert.

In einer ersten, in den Fig. 2 und 3 dargestellten Ausführungsform sind die Stützvorrichtungen 18 als Halbschalen ausgeführt, d.h., sie umfassen ein extrudiertes Rohr 5 am Umfang um 180°. Die drei im Vakuumtank 8 angeordneten Stützvorrichtungen 18 sind identisch ausgeführt, so dass die nachfolgenden Ausführungen für alle drei Stützvorrichtungen 18 gelten.

Die Stützvorrichtung 18 besitzt ein Mittelstück 19, welches axial stauch-und ausziehbar ausgeführt ist. Das Mittelstück 19 besteht aus einem ersten Satz flexibler Bänder 20 und einem zweiten Satz flexibler Bänder 21, die schräg zur Längsachse des extrudierten Rohres 5 verlaufen. Sie kreuzen sich nach Art eines Scherengitters und sind an Kreuzungspunkten gelenkig miteinander verbunden. Die flexiblen Bänder 20 des ersten Satzes sind nur im Mittelstück 19 angeordnet, d.h., nur im Mittelstück 19 liegt ein Scherengitter vor. Die Bänder 21 des zweiten Satzes erstrecken sich über das Mittelstück 19 hinaus und ihre Enden sind jeweils gelenkig an einen halbringförmigen Einlaufkopf 22 bzw. Auslaufkopf 23 angeschlagen. Die Enden der flexiblen Bänder 21 bilden somit einen Übergangsabschnitt 24 vom Mittelstück 19 zu den beiden Köpfen 22 bzw. 23. Die Übergangsabschnitte 24 verlaufen je nach dem Auszugsgrad des Mittelstücks 19 mehr oder weniger stark konisch. In der in Fig.2 gezeigten Situation ist das Mttelstück 19 stark ausgezogen, so dass der Konus der Übergangsabschnitte 24 entsprechend stark ausgebildet ist.

Der in Richtung der Kalibrierhülse 9 weisende Einlaufkopf 22 ist über eine Wand 25 starr mit dem Vakuumtank 8 verbunden, währen der gegenüberliegende Auslaufkopf 23 der Stützvorrichtung 18 über einen motorischen Längenauszug 26 mit der Wand 25, an der der Einlaufkopf 22 starr gelagert ist, verbunden ist. Je nach Antriebsrichtung des Längenauszugs 26 kann der Auslaufkopf 23 unter Stauchung des Mittelstücks 19 zum Einlaufkopf 22 hin bzw. unter Ausziehung des Mittelstücks 19 von diesem weg verlagert werden.

Soweit es noch ergänzender Erläuterungen zum Aufbau und zur Funktion der Stützvorrichtungen 18 bedarf, wird auf die DE 103 18 137 B3 verwiesen, die zwecks weiterer Beschreibung der Stützvorrichtung 18 zum Gegenstand des Ausführungsbeispiels gemacht wird. Die in dieser Patentschrift beschriebene Kalibrierhülse entspricht in Bezug auf die flexiblen Bänder 20 und 21 sowie der Anbindung des Mittelstücks 19 an die Köpfe 22 und 23 in längshalbierter Ausführung der Stützvorrichtung 18.

Zur Stabilisierung der Stützvorrichtung 18 sind an den freien Längsrändern des Mittelstücks 19 Halteschienen 27 vorgesehen. Die Längsränder der Stützvorrichtung 18 sind in diesen Halteschienen 27 nach Art einer Kulissenführung gelagert. Dazu sind an den Kreuzungspunkten zwischen den Bändern 20, 21 radial nach außen abragende Vorsprünge 28 vorgesehen, die mit Hinterschnitt in einer axialen Nut 29 der Halteschienen 27 geführt sind.

In dem vorliegenden Ausführungsbeispiel setzt sich die Kühlstrecke K der Extrusionslinie aus je einer im Vakuumtank 8 und im Kühltank 10 vorgesehenen Kühlstrecke K1 bzw. K2 zusammen, wobei diese beiden Kühlstrekken K1, K2 durch eine zwischen dem Vakuumtank 8 und dem Kühltank 10 vorgesehene Temperstrecke T1 unterbrochen sind. Im Vakuumtank 8 ist die Kühlstrecke K1 durch die weiter oben schon erwähnte Kühleinrichtung 14 realisiert, die nachfolgend näher beschrieben wird.

In dem Ausführungsbeispiel gemäß den Fig. 2 bis 4 ist die Kühlstrecke K1 aus vier Segmenten S1 bis S4 zusammengesetzt. Segment S1 ist dabei der Kalibrierhülse 9 zugeordnet und die Segmente S2 bis S4 den Stützvorrichtungen 18. Zunächst werden die gleich aufgebauten Segmente S2 bis S4 erläutert.

An den Halteschienen 27 der Stützvorrichtung 18 sind Halterungen 30 für Sprühdüsen 16 der Kühlvorrichtung 14 befestigt. In dem vorliegenden Ausführungsbeispiel sind vier auf den Umfang des Rohres 5 verteilte Reihen von Sprühdüsen 16 vorgesehen. Für jede Reihe von Sprühdüsen 16 ist eine Versorgungsleitung 15 vorhanden, wobei die einzelnen Sprühdüsen 16 über flexible Schläuche 31 mit den Versorgungsleitungen 15 verbunden sind. Da die Sprühdüsen 16 über die Halterungen 30 mit der Stützvorrichtung 18 verbunden sind, bleibt deren Abstand zur Oberfläche des Rohres 5 beim axialen Stauchen bzw. Ausziehen des Mittelstücks 19 immer gleich, so dass eine effektive Kühlung des Rohres 5 gegeben ist.

Aufgrund der schlechten Wärmeleitfähigkeit des Kunststoffes entsteht in der Rohrwandung ein Temperaturgefälle mit einer relativ niedrigen Oberflächentemperatur des Rohres 5 und einer höheren Temperatur auf der Innenseite des Rohres 5. Das führt zu einem schlechteren Wärmeübergang zwischen dem Rohr 5 und der Kühlflüssigkeit. Um dem entgegenzuwirken, sind zwischen den Stützvorrichtungen 18 stationäre Temperstrecken T2 bis T4 vorgesehen, in denen keine Kühlung erfolgt. Diese Temperstrecken T2 bis T4 sorgen im Vakuumtank 8 für einen gewissen Temperaturausgleich innerhalb der Rohrwandung, mit dem Effekt, dass sich die Rohraußenoberfläche wieder etwas erwärmt, wodurch der Wärmeübergang bei der Kühlung des Rohres 5 aufgrund der größeren Triebkraft (Temperaturgradient) in den nachfolgenden Segmenten S2 bis S4 der Kühlstrecke K1erhöht wird.

In dem in Fig. 2 gezeigten Ausführungsbeispiel werden die Segmente S2 bis S4, wie schon erwähnt, jeweils über vier Versorgungsleitungen 15 mit einer Kühlflüssigkeit versorgt. Die Versorgungsleitungen 15 der Segmente S2 bis S4 sind kühlmedienseitig getrennt, d.h., es gibt keine Verbindung zwischen den Versorgungsleitungen 15 der einzelnen Segmente S1 bis S4. Die Versorgung mit Kühlflüssigkeit erfolgt über separate Anschlüsse 32. Am Boden des Vakuumtanks 8 ist ein Ablauf 33 für die Kühlflüssigkeit vorgesehen, an der Oberseite ein Vakuumanschluss 34.

In Fig.1 ist die Kühleinrichtung 14 aus Gründen der Übersichtlichkeit nicht dargestellt. Aus dem gleichen Grund ist in Fig.2 für jedes der Segmente S1 bis S4 nur eine der Versorgungsleitungen 15 und deren Anbindung an die Sprühdüsen 16 gezeigt.

Durch die beschriebene Segmentierung der Kühlstrecke K1 ist deren Kühlleistung in einem großen Maße variierbar. Zum einen kann die Kühlmittelmenge von Segment zu Segment S1 bis S4 variiert werden, zum anderen die Temperatur des Kühlmediums. So ist es z.B. möglich, eines der Segmente S2 bis S4 zur Intensivkühlung einzusetzen, in dem dort ein besonders kaltes bzw. sehr stark kühlendes Kühlmittel eingesetzt wird. Des weiteren ist es zweckmäßig, eine Möglichkeit vorzusehen, einzelne Sprühdüsen 16 eines Segments S2 bis S4 separat abschalten oder zuschalten zu können. Dadurch ist zum einen die Kühlleistung veränderbar, zum anderen ist die Länge der Temperstrecken T2 bis T4 variierbar, wie aus Fig. 2 hervorgeht. Dort sind beispielhaft die letzten beiden Düsenkränze des Segments S3 und der erste Düsenkranz des Segments S4 abgeschaltet. Diese Abschaltung einzelner Düsen 16 oder von Düsengruppe kann über nicht dargestellte Schaltventile in den Versorgungsleitungen 15 realisiert werden. Derartige Schaltventile ermöglichen es auch, einzelne Düsen 16 oder Düsengruppen für eine Intensivkühlung zu nutzen. In diesem Falle müßten dann für diese Düsen 16 bzw. Düsengruppen zusätzlich separate Zuläufe für ein Intensivkühlmedlum vorgesehen werden.

In dem Ausführungsbeispiel gemäß Fig. 2 sind die Sprühdüsen 16 im Bereich der Kalibrierhülse 9 direkt an den Versorgungsleitungen 15 angeordnet. Auch hier ist es abweichend davon möglich, wie bei den Stützvorrichtungen 18, Halterungen 30 vorzusehen, über die die Sprühdüsen 16 an den Bänderlagen der Kalibrierhülse 9 befestigt sind. Dadurch wird auch hier immer ein optimaler Abstand der Sprühdüsen 16 zum Rohr 5 erreicht.

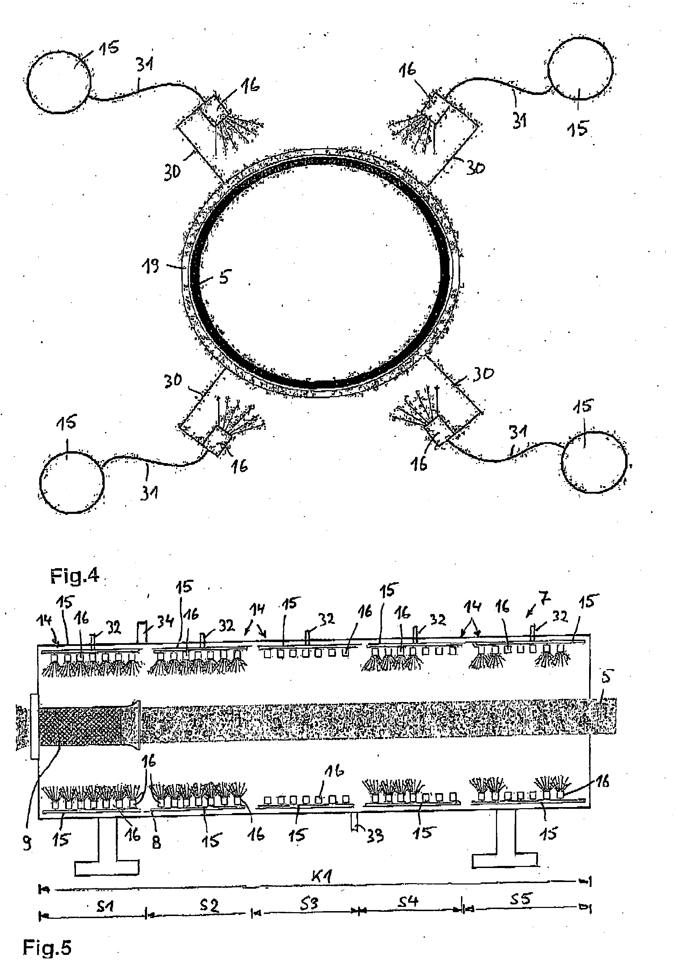

Das in Fig. 4 dargestellte Ausführungsbeispiel unterscheidet sich von dem vorhergehenden Ausführungsbeispiel dadurch, dass die Stützvorrichtung 18 als Volischale ausgebildet ist, d. h., sie umgibt ein extrudiertes Rohr 5 auf 360° seines Umfanges, d.h., vollständig. In diesem Falle sind die Halterungen 30 für die Sprühdüsen 15 direkt an den Gelenkpunkten zwischen den Bändern 20 und 21 befestigt. Aufgrund der 360°-Umfassung des extrudierten Rohres 5 ist es erforderlich, den Durchmesser der Stützvorrichtung 18 im Mittelstück 19 immer etwas größer einzustellen, als den in der Kalibrierhülse 9 eingestellten Durchmesser, um Zwängungen zwischen dem Rohr 5 und der Stützvorrichtung 18 zu vermeiden.

In Fig. 5 ist ein weiteres Ausführungsbeispiel für einen Vakuumtank 8 dargestellt. Als Stützvorrichtungen für das extrudierte Rohr 5 kommen hier andere Vorrichtungen zum Einsatz als bei den vorhergehenden Ausführungsbeispielen, z.B. die aus der DE 10 2004 059 515 B3 bekannten Stützvorrichtungen. Diese Stützvorrichtungen sind in Fig. 5 nicht dargestellt. Da die Düsen 16 der Kühleinrichtung 14 nicht an derartigen Stützvorrichtungen befestigbar sind, sind die Versorgungsleitungen 15 der in diesem Fall fünf im Vakuumtank 8 vorgesehen Segmente S1 bis S5 radial verstellbar an dem Gehäuse des Vakuumtanks 8 gelagert. Diese Lagerung ist nicht dargestellt, für einen Fachmann aber ohne weitere Erläuterungen realisierbar.

In der in Fig. 5 gezeigten Variante sind keine stationären Temperstrekken vorgesehen. Temperstrecken werden hier durch Abschalten von ganzen Segmenten oder aber durch Teilabschalfiung innerhalb von Segmenten hergestellt, wie anhand der Segmenet S3 bzw. S4 und S5 dargestellt. Auch bei dieser Ausführungsbeispiel ist die Schaffung von Intensivkühlzonen wie bei den vorgehenden Ausführungsbeispielen möglich.

Die Kühlstrecke K2 im Kühltank 10 kann analog der Darstellung gemäß Fig. 5 ausgeführt sein.

## Patentansprüche

1. Verfahren zum Betreiben einer Extrusionslinie für Hohlprofile aus Kunststoff, insbesondere zylinderförmige Rohre (5), mit einer-Kalibrier- und Kühleinheit (7) und mindestens einem sich in Extrusionsrichtung anschließenden Kühltank(10), die Kühlstrecken (K1, K2) aufweisen, bestehend aus einer Vielzahl von Düsen (16) zur Abgabe eines Kühlmediums, wobei die Kühlstrecke (K1, K2) der Kalibrier- und Kühleinheit (7) und/oder des Kühltanks (10) aus in Extrusionsrichtung hintereinander gereihten, kühlmedienseitig getrennten, separat ansteuerbaren Segmenten (S1 bis S5) zusammengesetzt ist, **dadurch gekennzeichnet, dass** für jede in der Extrusionslinie gefahrene Dimension des Hohlprofils (5) auf der Basis eines mathematischen Modells, in welches Prozess-, Anlagen- und Werkstoffparameter einfließen, eine Ansteuerung der Segmente (S1 bis S5) für eine optimale Kühlung des Hohlprofils (5) erfolgt, wobei einzelne Düsen (16) oder Düsengruppen eines Segments (S1 bis S5) separat ansteuerbar sind.

2. Verfahren nach Anspruch 1; **dadurch gekennzeichnet, dass** an mindestens einer Stelle der Extrusionslinie eine Erfassung der Wandtemperatur des Hohlprofils (5) erfolgt, und nach einem Vergleich des IstWerts mit dem Soll-Wert des mathematischen Modells eine Ansteuerung der Segmente (S1 bis S5) verfolgt.

3. Verfahren nach Anspruch 1 oder 2, **dadurch gekennzeichnet, dass** an definierten Stellen der Kühlstrecken (K1, K2) eine Intensivkühlung erfolgt.

4. Verfahren nach einem der vorstehenden Ansprüche, **dadurch gekennzeichnet, dass** die Düsen (16) der Segmente (S1 bis S5) in Anpassung an die gefahrene Dimension des Hohlprofils (5) radial verfahrbar sind.

## Claims

1. Method of operating an extrusion line for hollow profiles made of plastic, in particular cylindrical tubes (5), with a calibrating and cooling unit (7) and at least one cooling tank (10) which is adjacent in the direction of extrusion, which calibrating and cooling unit and cooling tank have cooling zones (K1, K2) consisting of a large number of nozzles (16) for dispensing a cooling medium, wherein the cooling zone (K1, K2) of the calibrating and cooling unit (7) and/or of the cooling tank (10) is composed of segments (S1 to S5) which are arranged in a row, one behind another, in the direction of extrusion, are separated on the cooling medium side and can be activated separately,
**characterised in that**,
for each size of hollow profile (5) conveyed in the extrusion line, activation of the segments (S1 to S5) for optimum cooling of the hollow profile (5) takes place on the basis of a mathematical model in which process, plant and material parameters are included, it being possible to activate separately individual nozzles (16) or groups of nozzles belonging to a segment (S1 to S5).

2. Method according to Claim 1,
**characterised in that** detection of the wall temperature of the hollow profile (5) takes place at at least one point in the extrusion line, and monitors activation of the segments (S1 to S5) after a comparison of the actual value with the ideal value of the mathematical model.

3. Method according to Claim 1 or 2,
**characterised in that**
intensive cooling takes place at defined points in the cooling zones (K1, K2).

4. Method according to one of the preceding claims,
**characterised in that**
the nozzles (16) of the segments (S1 to S5) can be moved radially to adapt to the size of hollow profile (5) being conveyed.

## Revendications

1. Procédé d'exploitation d'une ligne d'extrusion pour profilés creux en matière artificielle, en particulier pour des tubes de forme cylindrique (5), avec une unité de calibrage et de refroidissement (7) et au moins une citerne de refroidissement (10), installée à la suite dans le sens d'extrusion, qui présentent des sections de refroidissement (K1, K2) constituées d'une pluralité de buses (16) destinées à dégager un milieu réfrigérant, la section de refroidissement (K1, K2) de l'unité de calibrage et de refroidissement (7) et/ou de la citerne de refroidissement (10) étant composée de segments (S1 à S5) pouvant être activés séparément, qui sont disposés en rangée les uns derrière les autres dans le sens de l'extrusion, séparés côté milieu réfrigérant, **caractérisé en ce que** pour chaque dimension de profilé creux (5) produite dans la ligne d'extrusion sur la base d'un modèle mathématique, qui intègre des paramètres de processus, d'installation et de matériau, a lieu une activation des segments (S1 à S5) pour un refroidissement optimal du profilé creux (5), différentes buses (16) ou groupes de buses d'un segment (S1 à S5) pouvant être activées séparément.

2. Procédé suivant la revendication 1, **caractérisé en ce qu'**à un endroit au moins de la ligne d'extrusion a lieu une détection de la température de paroi du profilé creux (5) et après une comparaison de la valeur réelle à la valeur de consigne du modèle mathématique a lieu une activation des segments (S1 à S5).

3. Procédé suivant la revendication 1 ou 2, **caractérisé en ce qu'**un refroidissement intensif a lieu à des endroits définis des sections de refroidissement (K1, K2).

4. Procédé suivant une des revendications précédentes, **caractérisé en ce que** les buses (16) des segments (S1 à S5) sont déplaçables radialement en adaptation à la dimension du profilé creux (5) à produire.
